# EUROPEAN PATENT APPLICATION

(11) **EP 4 375 042 A1**
(43) Date of publication of application: **29.05.2024**
(21) Application number: 22209860.0
(22) Date of filing: 28.11.2022
(51) Int. Cl.: B29C 45/14, B29C 44/12, B29C 45/16

(54) **PROCESS FOR PRODUCING A PLASTICS COMPONENT**

(71) Applicant: BASF SE, 67056 Ludwigshafen am Rhein (DE)
(72) Inventor: WUEST, Andreas, 67056 Ludwigshafen am Rhein (DE)
(74) Representative: Kudla, Karsten

(57) **Abstract**

The invention relates to a process for producing a plastics component (1) comprising an insert (13) which is enclosed by a hollow body (11), the process comprising:
(a) placing the insert (13) into a mold such that a gap is formed between the insert (13) and the mold;
(b) feeding a polymer melt into the gap thereby forming the hollow body (11) enclosing the insert (13);
(c) removing the plastics component (1) from the mold;
wherein for forming the gap elevations (17) are formed on the insert (13), or wherein the mold comprises pins (25) on which the insert is placed.

## Description

The invention relates to a process for producing a plastics component comprising an insert which is enclosed by a hollow body, the process comprising:
(a) placing the insert into a mold such that a gap is formed between the insert and the mold;
(b) feeding a polymer melt into the gap thereby forming the hollow body enclosing the insert;
(c) removing the plastics component from the mold.

Plastic components which are produced by injection molding have to be adapted to the limits and boundary conditions given by the injection molding process and must be accordingly designed. Limitations of an injection molding process usually are due to mass accumulations and to the demolding of the injection molded plastics component by opening the mold.

Mass accumulations usually result in higher cycle times, because the plastics component needs longer cooling times. Further, mass accumulations also increase the risk for buildup of internal voids. For this reasons, the plastics components produced by injection molding processes should have a small wall thickness.

For demolding the plastics component, it is necessary, that each internal core, insert or geometric design, which reduces the mass accumulations must have a shape which allows opening the mold and withdraw the plastics component. This leads to constraints in the geometry of the plastics component and requires molds with complex moveable cores and complex kinematics for opening and closing.

Presently, there are several non-standard injection molding processes by which hollow parts can be produced to avoid such mass accumulations. Such non-standard injection molding processes are for example Gas-Assisted Injection Molding (GAIM) or Water-Assisted Injection Molding Technology (WIT) or fusible core technology.

In GAIM/WIT the mold is completely filled with the polymer melt and subsequently a part of the hot polymer melt is pushed out of the mold by injecting a liquid, usually water, or a gas. By this injection of liquid or gas the polymer melt contacting the walls of the mold remains in the mold and a hollow part is formed. In fusible core technology, a metal core is inserted in the mold which afterwards has to be melted out for creating the hollow section.

GAIM/WIT processes have the disadvantage that a complex injection machine is necessary for injecting the liquid or gas and further, due to the high pressure and velocity of the liquid or gas, the wall thickness of the hollow part or the plastics component may be uneven. In fusible core technology, the removal of the metal core results in additional process steps.

Therefore, it is an object of the present invention to provide a process for producing plastics components without mass accumulations and which does not have the disadvantages of the known GAIM/WIT processes or the fusible core technology.

This object is achieved by a process for producing a plastics component comprising an insert which is enclosed by a hollow body, the process comprising:
(a) placing the insert into a mold such that a gap is formed between the insert and the mold;
(b) feeding a polymer melt into the gap thereby forming the hollow body enclosing the insert;
(c) removing the plastics component from the mold,
wherein for forming the gap elevations are formed on the insert, or wherein the mold comprises pins on which the insert is placed.

By using the insert and keeping the insert in the plastics component, a plastics component comprising sections with different wall thicknesses can be produced without the disadvantages of the known processes. Particularly if an insert is used with a low weight, a plastics component can be produced which has a lower weight than a plastics component with walls made of solid material.

Further, by forming the gap by using elevations formed on the insert or pins in the mold onto which the insert is placed, the insert forms a part of the mold. For this reason, the walls of the plastics component which form the hollow body have a defined thickness and shape in difference to the walls produced by the known GAIM/WIT processes. In difference to the fusible core technology the insert remains in the plastics component and is not melted out, so that the process is much simpler. For producing the plastics component by the inventive process, a standard injection molding process can be used, which also simplifies the process for producing the plastics component. Other liquid plastics molding processes, e.g. casting processes (e.g. RIM) are also suitable.

For producing a lightweight component, it is preferred to use an insert which is made of a foam or which is a second hollow body. Due to the gas forming the bubbles of the foam, the foam has a much lower density than a solid insert, so that a component can be produced which has a lower weight than a comparable component with solid walls.

As the insert forms a part of the mold during feeding the polymer melt, it is necessary to use a material or a construction of the insert which is able to withstand the loads and temperatures during feeding the polymer melt.

If the insert is a second hollow body, it is preferred to produce at least two parts of the second hollow body and to connect the parts afterward for forming the second hollow body. The connection may be realized by welding, soldering or gluing. Alternatively, it is also possible to only place the parts together without any fixation, because the parts are fixed in the mold by the elevations or the pins and after being surrounded by the polymer melt from the polymer forming the hollow body. However, for avoiding a displacement of the parts, it is preferred to provide grooves and tongues or recesses on the edges which are in contact when the parts are connected. If the second hollow body is formed by connecting at least two parts, it is particularly advantageous that the parts can be produced by standard processes, for example by standard injection molding.

Depending on the size of the insert and the pressure which acts on the insert, it may be necessary to reinforce the insert, if it is a second hollow body. For reinforcing the second hollow body, it for example may comprise columns or walls connecting opposite inner walls of the second hollow body. The columns or walls which connect opposite inner walls of the second hollow body may be separate parts which are placed in one part before connection with a second part or may be formed integrally with at least one part. If the columns or walls are formed integrally with one part, they preferably have such a height that the part which forms the opposite inner wall is in contact with the upper end of the columns or walls after being connected to the part with the integrally formed columns or walls. Further, it is also possible to form a part of the columns or walls integrally on those parts which are placed such that they form opposite inner walls of the second hollow body and after connecting the parts of the hollow body, the parts of the walls or columns of the parts of the hollow body which form opposite inner walls also are in contact and such form the columns or walls.

Besides the columns or walls, or additionally to the columns or walls, the inner or outer walls of the second hollow body may be reinforced by ribs or other suitable geometric reinforcements formed on the walls of the parts for producing the second hollow body.

If the insert is made of a foam, a foam must be used which essentially maintains its shape when the polymer melt is fed into the mold. For this purpose, the insert preferably is made of a foam with high compression stiffness.

Suitable materials, the insert may be made of are all materials from which an insert can be formed which essentially maintains its shape when the polymer melt is fed into the mold. Such materials may be for example polymer materials like thermoplastics or thermosets, ceramics or metals. Particularly preferably, the insert is made of a polymeric material.

If the insert is made of a polymeric material, preferably a polymeric material is used which forms a homogeneous connection with the polymer being fed into the gap between the insert and the walls of the mold. A homogeneous connection in this context means that the insert and the hollow body enclosing the insert are in contact over the whole surface and particularly that the polymer melt being fed into the gap between the mold and the insert melts the outer surface of the insert and welds to the outer surface of the insert, such that a non-separable form-fit connection between the insert and the hollow body is formed.

Further, to achieve a stable insert, it may be advantageous to reinforce the insert. If a polymeric material is used for producing the insert, the polymeric material may be reinforced by adding short fibers or long fibers or a pulverulent reinforcing material like talc. Further, for reinforcing the insert it is also possible to use continuous fibers. Irrespectively of using short fibers, long fibers or continuous fibers for reinforcing the insert, the fibers may be glass fibers, carbon fibers, aramid fibers, or natural fibers like hemp or wool. If the insert is made of a foam and continuous fibers are used for reinforcing the insert, all known technologies to connect foam and fibers can be used, for example overfoaming the fibers or putting pre-produced fiber parts into/onto the foam which build up the desired load paths.

To be able to recycle the plastics component produced by the inventive process without complex separation steps to separate different materials used for forming the plastics component, it is particularly preferred to use the same polymer for forming the insert and the hollow body.

Suitable polymers for forming the insert and/or the hollow body of the plastics component preferably are a polyamide (PA), polyethylene (PE), polybutylene terephthalate (PBT), polyesters, polyoxymethylene (POM) or polypropylene (PP). Due to the high compression strength of a polyamide foam, Polyamide based materials, which may be reinforced, are preferred. Thus, if the polymer forming the hollow body e.g. is polypropylene, the insert preferably is made of polypropylene or expanded propylene. If a polyamide is used as polymer for the hollow body, the insert also is made of a polymer and particularly of the same type of polymer as the hollow body.

Besides the insert, it is also possible to use a reinforced polymer for forming the hollow body. In this case, for forming the hollow body, the polymer melt may contain short fibers or long fibers or a pulverulent reinforcing material. The materials, the fibers are made of, or the pulverulent material may be any material known to the skilled person for fibers or as pulverulent reinforcing material and preferably, a material is used as described above in regard to the insert.

Besides a reinforcing material, the polymer material for producing the insert and the polymeric material for producing the hollow body may contain additives as usually used in polymeric materials. Such additives for example are plasticizers, impact modifiers, dyes, or any other type of additive known to the skilled person.

Using a polymer as insert and particularly using a foam or a second hollow body as insert is possible, because under mechanical load usually the highest stresses are located in the outer regions of the hollow body surrounding the insert. For this reason, there are no high stresses acting on the insert and, thus, the insert can be made from a material with lower mechanical performance.

For producing the plastics component, in a first step the insert is placed in a mold. Thereby, the insert is placed into the mold in such a way that a gap is formed between the inner walls of the mold and the insert. This gap defines the cavity for the filling process, by which the hollow body is formed. According to the invention, for forming the gap, elevations are formed on the insert or the mold comprises pins onto which the insert is placed.

If elevations are formed on the insert, the elevations may be formed integrally on the insert or may be separate components which are connected to the insert.

Elevations, which are formed integrally on the insert, preferably are formed while forming the insert. If the insert is made of a foam, the elevations in this case usually also are made of the foam. If the insert is a second hollow body, the elevations in this case are formed on the outer surface of the second hollow body and usually also are formed while forming the parts, the second hollow body is made of. If the parts for forming the second hollow body are made by injection molding, recesses are provided in the molds for producing the parts of the second hollow body at those positions where the elevations should be.

An insert made of a foam may be produced by cutting the insert out of a foam or by forming the foamed insert in a mold. If the foamed insert is formed in a mold, also in this case, recesses are provided at those positions where the elevations shall be. While forming the foamed insert, also the elevations are formed, wherein the elevations also are made of the foam. Also if the insert is cut out of a foamed raw material, the elevations may be formed on the foam or being made of the foam.

If the elevations are separate components, they may be connected to the insert by any suitable method known to the skilled person. The elevations for example may be glued to the insert by using an adhesive or welded to the insert. Further, for connecting the elevations to the insert, they may be partly enclosed from the insert. To enclose the elevations partly from the insert, it is preferred to place the elevations into a mold and subsequently form the insert by injecting either the material forming the foamed insert or by injecting a polymer melt to form the parts for the second hollow body.

Further, if the elevations are separate components, they may be made of a different material or the same material as the insert is made of. However, if the insert and the hollow body which form the plastics component are made of different materials, it is particularly preferred to make the elevations from the same material, the hollow body of the plastics component is made of.

The elevations may have any suitable form, for example a conical or cylindrical shape. Besides a conical or a cylindrical shape any other shape may also be possible. Preferably, the elevations have a conical shape and are connected to the insert or part of the insert in such a way that the tips of the elevations are in contact with the mold when the insert is placed in the mold. Such a conical shape is particularly preferred if the elevations are made of a material different from the polymer the hollow body is made of or are made of a foam. Due to the conical shape and the orientation such that the tips of the conical elevations are in contact with the mold, the surface contact with the mold is minimized and the elevations stay invisible in the plastics part after demolding.

If the elevations are made of a solid material and made of the same polymer as the hollow body of the plastics component, the elevations usually also remain invisible if they have a different shape, for example a cylindrical shape, and a larger contact area with the surface of the mold. Due to using the same material, at least the surface of the elevations melts during feeding the polymer melt and the polymer melt forms an integral connection with the elevations.

For minimizing the contact area with the surface of the mold, it is alternatively also possible to provide the elevations with a convex curved surface on the side facing away from the insert.

However, particularly preferably, the elevations have a conical shape.

If for forming the gap between the inner surface of the mold and the insert the mold comprises pins, the pins may be fixed or retractable. To achieve a closed hollow body enclosing the insert without openings after deforming the plastics component, it is preferred that the pins are retractable. To avoid a displacement of the insert during feeding the mold, it is further preferred, if the pins are consecutively retracted when the polymer reaches them during feeding.

Since the insert remains in the plastics component produced by the inventive process, the insert forms a part of the mold during feeding the polymer melt for forming the hollow body. This has the advantage, that the inner surface of the hollow body may have any possible shape. The insert for example may be furnished with a structured surface.

For forming the structured surface, the insert for example may comprise recesses such that during feeding, the polymer melt fills the recesses. As the insert remains in the plastics component, it is further possible to form protrusions with undercuts on the inner surface of the hollow body of the plastics component.

The structures of the surface may be such that protrusions and recesses are smaller than the average wall thickness of the hollow body. Such structures of the surface may help to define a better load transfer between the stiff polymer material of the hollow body and the insert. Further, a micro treatment, for example small textures or a plasma treatment, of the surface can be advantageous as it enables a better connection of the insert to the hollow body.

Besides the small protrusions and recesses, in a preferred embodiment, the recesses have such a form that the protrusions formed on the inner surface of the hollow body for example form reinforcing ribs. Such protrusions like reinforcing ribs allow to reinforce the hollow body without altering the outer surface of the hollow body. Thus, even though the hollow body has a smooth surface, reinforcing ribs can be provided.

Further, for reinforcing it also may be suitable to form connecting bars which connect opposite inner surfaces of the hollow body. For this purpose, openings are formed in the insert and during feeding the polymer melt, the openings are filled with the polymer melt, thereby forming the connecting bars between the opposite inner surfaces of the hollow body. In this case the design of the core forms defined cavities for the polymer melt. After the filling process those cavities act as well defined load paths in the plastics component which improve the mechanical behavior.

After placing the insert into the mold, the mold is closed and the polymer melt is fed into the mold. For feeding the polymer melt into the mold, any suitable process known to the skilled person can be used. The polymer melt for example may be fed by an injection molding process. In this case, the mold into which the insert is placed before feeding the polymer melt, is a mold of an injection molding machine. Besides feeding the polymer melt by using an injection molding process, a casting process or a centrifugal casting process can be used for feeding the polymer melt into the mold. In these cases the mold is a mold of a casting machine or of a centrifugal casting machine, respectively. However, preferably, an injection molding process is used for feeding the polymer melt into the mold.

After feeding the polymer melt into the mold

Embodiments of the invention are shown in the figures and are described in more detail in the following description.

In the figures:
- Figure 1: shows a plastics component produced by a GAIM/WIT process according to the state of the art;
- Figure 2: shows a plastics component produced by the inventive process;
- Figure 3: shows a plastics component with elevations on the insert having a conical shape;
- Figure 4: shows a plastics component with elevations on the insert having a conical shape in a second embodiment;
- Figure 5: shows a plastics component with elevations on the insert in the form of cylindrical pins;
- Figure 6: shows schematically a fixation of the insert with retractable pins;
- Figure 7: shows a plastics component with an insert having a structured surface;
- Figure 8: shows an insert with recesses and an opening to form additional cavities to be filled;
- Figure 9: shows an insert in the form of a hollow body.

In the figures an exemplary plastics component is shown for demonstration purposes. A plastics component produced by the inventive process may have any geometry which can be produced by an injection molding or casting process and may have for example more or less sections having different wall thicknesses as shown here. Plastics components produced with the inventive process for example may have a simple geometry like a cylinder, a cone, or a sphere or may have any other geometric shape. Further, the plastics component may have a much more complex structure as shown here.

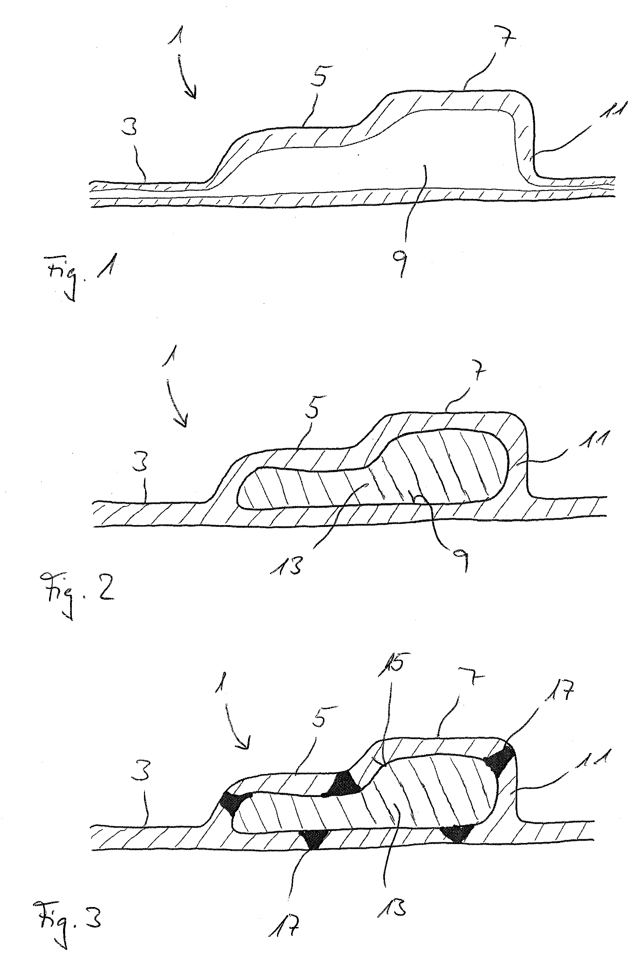

Figure 1 shows an exemplary plastics component produced by a GAIM/WIT process according to the state of the art.

A plastics component 1 comprises several sections having different thicknesses. A first section 3 with a small wall thickness, a second section 5 with a medium wall thickness and a third section 7 with a large wall thickness. To avoid material accumulations in the second section 5 and the third section 7, the plastics component comprises a cavity 9, which is enclosed by the polymer material, which forms a hollow body 11.

According to the state of the art, the cavity 9 is formed by injecting a gas or a liquid after having filled a mold with a polymer melt. The gas or the liquid cast out polymer melt and the cavity 9 forms. By this process material accumulations are avoided and the hollow body 11 is produced.

However, due to the process, variations in wall thickness of the hollow body and uneven walls cannot be avoided. Further slight variations in pressure or velocity of the gas or liquid for removing the polymer melt may result in differences of the geometry of the hollow body.

To avoid these disadvantages, by the inventive process a plastics component is produced which comprises an insert which is enclosed by a hollow body. An example for such a plastics component is shown in figure 2.

The plastics component 1 of figure 2 has the same exterior geometry as the plastics component 1 shown in figure 1. However, in difference to the plastics component 1 produced by a process according to the state of the art, the plastics component 1 produced by the inventive process comprises an insert 13 which completely fills the cavity 9 of the hollow body 11.

By using the insert 13, it is possible to produce the hollow body 11 with defined wall thicknesses and to avoid unintended different wall thicknesses. The insert 13 may be for example a foam or a second hollow body which may be made of a metal, a ceramic or an optionally reinforced polymer.

For producing the plastics component 1, the insert 13 is placed in a mold, thereby forming a gap between the insert 13 and the inner walls of the mold. Afterwards, a polymer melt is fed into the gap, forming the hollow body 11.

For forming the gap, it is possible to either provide elevations on the insert or use pins in the mold onto which the insert is placed.

Figures 3 to 5 show different embodiments for elevations on the insert.

A plastics component with elevations having a conical shape on the insert is shown in figure 3.
to achieve a hollow body 11 having a desired wall thickness, it is necessary to provide a mold into which the polymer melt is fed, which has a cavity corresponding to the desired shape of the hollow body. According to the inventive process, the cavity is bounded by the inner walls of the mold and the surface 15 of the insert 13. As the surface 15 of the insert is opposite the inner walls of the mold, the cavity into which the polymer melt for forming the hollow body 11 flows, has the form of a gap. The distance between the surface 15 of the insert 13 and the inner walls of the mold and, thus, the thickness of the walls of the hollow body 11 is defined by elevations 17 on the insert 13.

When the insert is placed into the mold, the elevations 17 are in contact with the inner walls of the mold and the insert 13 rests with the elevations 17 on the inner walls of the mold. By this, the gap is formed into which the polymer melt for forming the hollow body 11 flows.

In the embodiment shown in figure 3, the elevations are placed on top of the surface 15 of the insert 13. This can be achieved by providing elevations and connect them to the surface 15 of the insert, for example by gluing or welding. In this case, the elevations 17 may be made of the same material as the insert 13 or of a different material which can be fixed to the surface 15 of the insert 13. If the insert 13 and the hollow body 11 are made of different materials and the elevations are made of a material different from the material the insert is made of, it is particularly preferred if the elevations 17 are made of the same material as the hollow body 11. If the insert 13 and the hollow body 11 are made of the same material, it is preferred that the elevations 17 also are made of the same material.

Besides producing the elevations 17 separately from the insert 13 and fix them on the surface 15 of the insert 13, it is also possible and preferred to produce the elevations 17 integrally with the insert 13.

Particularly if the elevations 13 and the hollow body 11 are made of different materials or the elevations 17 are made integrally with the insert 13, a conical shape of the elevations 17 as shown in figure 3 is preferred to minimize the contact area of the elevations 17 on the inner walls of the mold. This is particularly preferred, if the elevations 17 are produced integrally with the insert 13 and the insert is a foam, because in this case, the elevations 17 also are made of the foam.

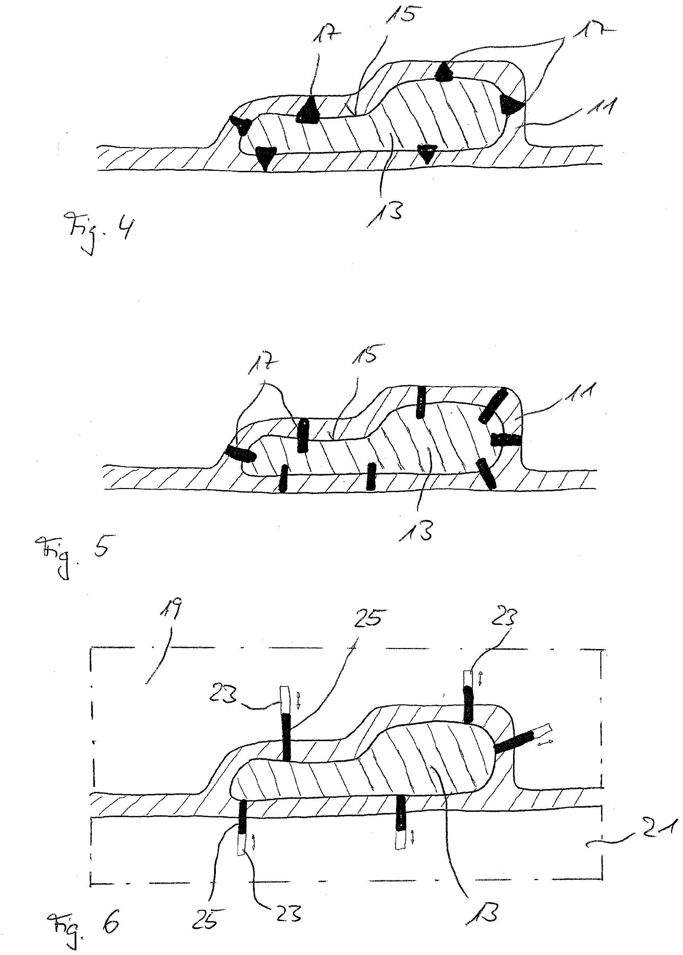

An alternative for fixing elevations 17 to the insert 13 is shown in figure 4.

The elevations shown in figure 4 also have a conical shape. However, in difference to the embodiment shown in figure 3, the elevations 17 shown in figure 4 are not fixed on the surface 15 of the insert 13 but are partly enclosed from the material of the insert 13. This design of the insert 13 has the advantage that for fixing the elevations 17 to the insert 13 no adhesive for gluing or additional step for fixing them onto the surface 15 of the insert 13, for example by welding, is needed.

Such a design of the insert 13 with partly enclosed elevations 17 is particularly preferred if the elevations 17 are made of a solid material and the insert 13 is made of a foam. Also in this case, the elevations 17 preferably are made of the same material as the hollow body 11.

For producing the insert 13 with partially enclosed elevations 17, for example the elevations 17 are placed in a mold for producing the insert 13 and subsequently the material for forming the insert 13 is fed into the mold.

A further alterative for elevations 17 being at least partly enclosed from the material of the insert 13 is shown in figure 5.

The embodiment shown in figure 5 differs from that shown in figure 4 only in the shape of the elevations 17. In difference to the embodiment of figure 4, the elevations 17 of the embodiment shown in figure 5 have a cylindrical shape.

Besides the cylindrical shape of the elevations 17 shown in figure 5 or the conical shape of the elevations 17 shown in figures 3 or 4, the elevations 17 may have any other shape, for example a pyramid, a sphere or a hemisphere, or a cube.

Alternatively to the elevations 17 for forming the gap into which the polymer melt for forming the hollow body 11 flows, as shown in figures 3 to 5, for forming the gap pins in the mold may be used. This is exemplary shown in figure 6.

For illustrative purposes, figure 6 shows a section of a mold, the mold comprising a first part 19 and a second part 21. For molding the hollow body 11 of the plastics component 1, the first part 19 and the second part 21 are closed, thereby forming the mold. Each part 19, 21 of the mold comprises openings 23 in which pins 25 are accommodated. The pins 25 either may be fixed or, preferably, retractable. If the pins are retractable, for placing the insert 13 into the mold, the mold is opened and the pins 25 are moved into a first position protruding into the mold. The length with which the pins protrude into the mold corresponds to the width of the gap, into which the polymer melt is injected for forming the hollow body. Afterwards, the insert 13 is placed on the pins and the mold is closed. Alternatively, it is also possible to place the insert on the inner surface of the first part 19 or the second part 21, close the mold and then move the pins 25 into the protruded position for forming the gap.

For forming the hollow body, it is possible to leave the pins 25 in the protruded position during feeding the polymer melt. However, this has the disadvantage that the hollow body has holes after removing from the mold. Therefore, it is preferred to use retractable pins 25 and consecutively retract the pins 25 into their openings 23 when the polymer melt reaches the respective pins 25 during filling the mold. By consecutively retracting the pins 25 during filling the gap, the gap upstream the melt front is filled with polymer melt and thus, the insert 13 remains at its place.

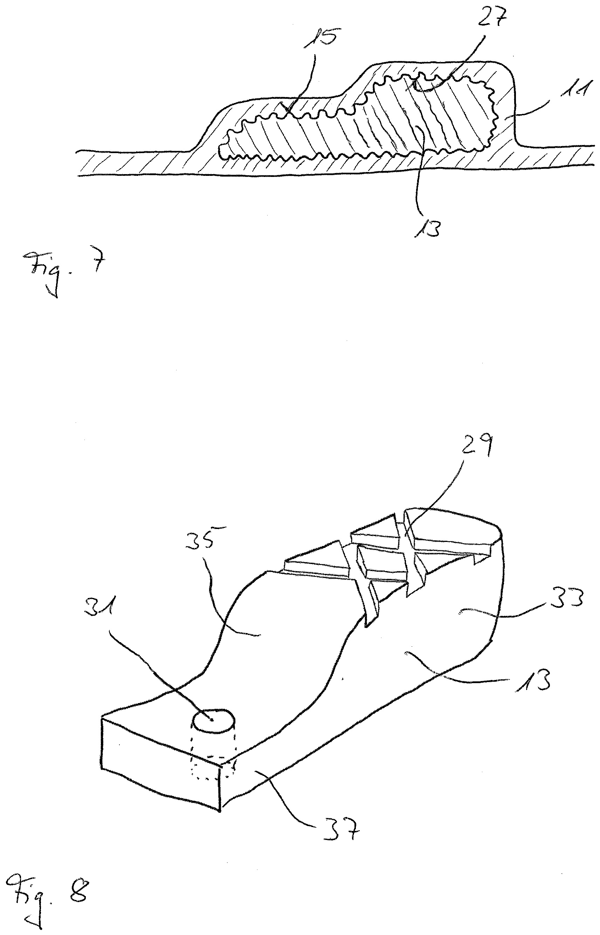

Figure 7 shows a plastics component with an insert having a structured surface.

Besides a smooth surface as shown in figures 2 to 6, the surface 15 of the insert 13 may have a structure 27. Depending on the intended function of the structure 27, the insert 13 may have a structure 27 with small surface variation or with large surface variation. A small surface variation means that the distance between the highest point of protrusions and the lowest point of recesses of the structure is smaller than half the average wall thickness of the hollow body. A small surface variation for example can help to define a better load transfer between the material of the hollow body 11 and the material of the insert 13. Further, particularly when a torsional load acts on the plastics component, a small surface variation better connects the insert 13 to the hollow body 11 and, thus, the insert 13 does not slip inside the hollow body 11 but also distorts when a torsional load acts on the plastics component and the relative position of the contact surfaces of the insert 13 and the hollow body 11 remains constant.

The structure 27 may have any suitable geometry, for example undulated, zigzag, triangular or grooved. Further, the surface may have elevations in any possible shape, for example pyramids, cones, hemispheres, cylinders or with any other shape.

Besides a small surface variation, the structure also may comprise a large surface variation which means that the distance between the lowest point of the recesses and the highest point of protrusions is larger than half the average wall thickness or the hollow body. Such large surface variations may comprise for example reinforcing ribs. Besides a structure with either small surface variation or large surface variation, also a combination of small surface variation and large surface variation is possible.

An example for an insert having a structure with large surface variation is shown in figure 8.

The insert 13 comprises recesses 29 and a hole 31. When filling the gap with the polymer melt for forming the hollow body, polymer melt flows into the recesses 29 and the hole 31. After curing, the polymer which filled the recesses 29 forms ribs on the inner surface of the hollow body. The polymer which filled the hole 31 forms a connection between two opposite inner surfaces of the hollow body, thereby reinforcing the polymer component.

Besides comprising recesses 29 and a hole 31 as shown here, the insert 13 also may comprise only at least one hole 31 or only recesses 29 for forming reinforcing ribs on the inner surface of the hollow body 11. The geometry of the recesses thereby depends on the intended form of the reinforcing ribs. Besides intersecting grooves as recesses 29 as shown here, the recesses 29 also may be grooves with any shape arranged in parallel. Further, it is possible to provide the recesses 29 not only on the thickest part 33 of the insert 13 as shown here but also on further surfaces, like the inclining surface 35 connecting the thinner part 37 with the thickest part 33 and/or on the thinner part 37. Further, grooves 29 may be provided on any other surface of the insert 13.

The optimal position and shape of the recesses depends on the intended shape of the reinforcing ribs for optimal mechanical performance and can be determined by a simulation calculation. The same also applies for holes 31 through which the polymer melt flows for forming connections between two inner surfaces of the hollow body.

The hole 31 may have any cross sectional area, for example circular as shown here. However, besides a circular shape, the cross sectional area may be for example oval, quadratic, triangular, cross-shaped or have the form of any polygon. Further, the cross sectional area of the hole may be constant over the whole length of the hole 31 or vary. The cross sectional area for example may decrease or increase or firstly decrease and then increase or firstly increase and then decrease. Further, the hole 31 may change the shape of the cross sectional area along its length.

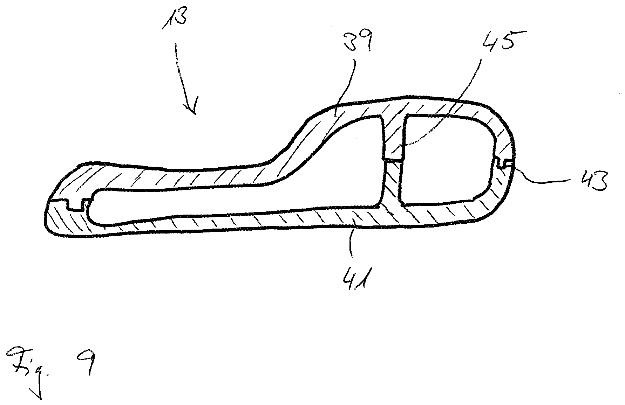

The insert 13 as shown in figures 2 to 8 preferably is made of a foam. As an alternative, the insert 13 also may be a second hollow body. This is shown for example in figure 9.

If the insert 13 is a second hollow body, it is preferred that the insert 13 comprises at least a first part 39 and a second part 41, wherein the first part 39 and the second part 41 are connected and thereby form the insert 13. However, besides only two parts 39, 41 as shown here, depending on the shape of the insert 13, the insert 13 also may be made of more than only two parts.

For a stable connection of the parts 39, 41 forming the insert, it is preferred if the connecting edges 43 of the parts 39, 41 are structured, for example as shown here by having a tongue and groove. When connecting the parts, the tongue slips into the groove and, thus, the parts cannot move against each other. As an alternative to tongue and groove as shown here, it is also possible to provide each of the connecting edges with a protrusion, the protrusion of one part on the outer surface and the protrusion of the other part on the inner surface, so that the part with the protrusion on the inner surface can slip into the part with the protrusion on the outer surface and thus form a stable connection.

Additionally, the parts may be fixed for example by gluing or welding.

For reinforcing the insert 13, which forms a second hollow body, it is possible to provide columns or walls 45 by which two opposite inner surfaces of the hollow body are connected. Thereby, the columns and/or walls may be produced on one part of the insert 13 or partly on two parts, wherein the contacting parts of the partly formed columns and/or walls form the connecting column or wall inside the second hollow body, as shown here.

As an alternative or additionally to a wall or column connecting two opposite sides there also may be formed reinforcing ribs on a part of the inner surface or on the whole inner surface of the second hollow body.

## Claims

1. A process for producing a plastics component (1) comprising an insert (13) which is enclosed by a hollow body (11), the process comprising:
(a) placing the insert (13) into a mold such that a gap is formed between the insert (13) and the mold;
(b) feeding a polymer melt into the gap thereby forming the hollow body (11) enclosing the insert (13);
(c) removing the plastics component (1) from the mold;
wherein for forming the gap elevations (17) are formed on the insert (13), or wherein the mold comprises pins (25) on which the insert is placed.

2. The process according to claim 1, wherein the insert (13) is made of a foam or is a second hollow body.

3. The process according to claim 2, wherein the second hollow body comprises columns or walls (45) connecting opposite inner walls of the second hollow body for reinforcing the second hollow body.

4. The process according to any of claims 1 to 3, wherein the insert (13) is made of a metal, a ceramic or a polymer.

5. The process according to any of claims 1 to 3, wherein the insert (13) is made of a polymeric material which forms a homogeneous connection with the polymer being fed into the gap.

6. The process according to any of claims 1 to 5, wherein the polymer the insert (13) is made of and the polymer the hollow body (11) is made of is a polyamide, polyethylene or polypropylene.

7. The process according to any of claims 1 to 6, wherein the polymer which is inserted into the gap is the same polymer the insert (13) is made of.

8. The process according to any of claims 1 to 7, wherein the elevations (17) are made from the same material as the insert (13).

9. The process according to any of claims 1 to 8, wherein the elevations (17) are formed integrally on the insert (13).

10. The process according to any of claims 1 to 7, wherein the elevations (17) are separate components and connected to the insert (13).

11. The process according to any of claims 1 to 10, wherein the elevations (17) have a conical shape and the elevations (17) being connected to the insert in such a way that the tips of the elevations (17) are in contact with the mold when the insert (13) is placed in the mold.

12. The process according to any of claims 1 to 7, wherein the pins (25) of the mold are retractable, and the pins (25) preferably are consecutively retracted when the polymer melt reaches them during feeding the polymer melt.

13. The process according to any of claims 1 to 12, wherein the insert (13) has a structured surface (27).

14. The process according to any of claims 1 to 13, wherein the surface of the insert (13) comprises recesses (29) such that during feeding the polymer melt, the polymer melt fills the recesses (29), the recesses (29) preferably having such a form that reinforcing ribs are formed on the inner surface of the hollow body (11).

15. The process according to any of claims 1 to 14, wherein openings (31) are formed in the insert (13) which are filled with the polymer melt during the feeding step, thereby forming connecting bars between tow opposite inner surfaces of the hollow body (11).
